# EUROPÄISCHE PATENTSCHRIFT

(11) **EP 3 851 806 B1**
(45) Veröffentlichungstag und Bekanntmachung des Hinweises auf die Patenterteilung: **11.01.2023**
(21) Anmeldenummer: 20152049.1
(22) Anmeldetag: 15.01.2020
(51) Int. Cl.: G01D 5/347

(54) **SENSORANORDNUNG UND EIN VERFAHREN ZUM BETRIEB EINER SENSORANORDNUNG**
SENSOR ASSEMBLY AND METHOD FOR OPERATING A SENSOR ASSEMBLY
DISPOSITIF CAPTEUR ET PROCÉDÉ DE FONCTIONNEMENT D'UN DISPOSITIF CAPTEUR

(43) Veröffentlichungstag der Anmeldung: 21.07.2021
(73) Patentinhaber: Leuze electronic GmbH + Co. KG, 73277 Owen/Teck (DE)
(72) Erfinder: Köbel, Herbert, 73277 Owen/Teck (DE); Sanzi, Dr., Friedrich, 73230 Kirchheim/Teck (DE)
(74) Vertreter: Ruckh, Rainer Gerhard

(56) Entgegenhaltungen:
- EP-A1- 2 037 224
- EP-A2- 2 487 464
- DE-A1-102006 041 799
- DE-A1-102008 032 786

## Beschreibung

Die Erfindung betrifft eine Sensoranordnung und ein Verfahren zum Betrieb einer Sensoranordnung.

Derartige Sensoranordnungen werden insbesondere zur Positionierung von Fahrzeugen oder ähnlichen beweglichen Einheiten eingesetzt. Die Positionierung erfolgt dabei sensorgesteuert derart, dass mit einem Sensor, insbesondere einem optischen Sensor, der am Fahrzeug angebracht ist, stationär angeordnete Markierungen erfasst werden.

Die EP 1 586 866 B1 betrifft ein Verfahren zur Bestimmung der Position eines Sensors relativ zu einem von Marken gebildeten Positionsmaßstab, welche relativ zueinander bewegbar sind, wobei der Sensor eine Beleuchtungseinheit zur Beleuchtung der Marken, eine Flächenkamera zur Erfassung der Marken und eine Auswerteeinheit zur Auswertung der Ausgangssignale der Flächenkamera aufweist. Durch Erfassung von in den Marken kodierten Positionsinformationen und durch Ermittlung der Lage einer jeweils erfassten Marke innerhalb des von der Flächenkamera erfassten Bildes wird die Position des Sensors relativ zum Positionsmaßstab bestimmt. Während eines Einlernvorgangs wird der Sensor relativ zum Positionsmaßstab ausgerichtet, wobei nach erfolgter Ausrichtung die Geometrie wenigstens einer mit der Flächenkamera erfassten Marke als Sollgröße in der Auswerteeinheit abgespeichert wird. Während der auf den Einlernvorgang folgenden Betriebsphase werden aus den Abweichungen aktuell ermittelter Geometrien von Marken in Bezug auf die abgespeicherte Sollgröße in der Auswerteeinheit Korrekturwerte zur Kompensation von Justagefehlern berechnet.

Die EP 2037 224 A1 betrifft ein Verfahren und eine Vorrichtung zum Bestimmen der Position eines Fahrzeugs welches entlang einer Bahn bewegt wird, wobei entlang der Bahn Marker, insbesondere Codeträger oder Barcodes, angeordnet sind. Das Verfahren ist dadurch gekennzeichnet, dass die Marker mit einer an dem Fahrzeug angeordneten Digitalkamera erfasst werden, dass mittels Bildverarbeitung aus einer Lage mindestens eines Markerbilds im Erfassungsbereich der Digitalkamera eine Relativposition des Fahrzeugs bezüglich des jeweiligen Markers oder der jeweiligen Marker bestimmt wird, dass auf Grundlage von Messdaten eines mit dem Fahrzeug gekoppelten Beschleunigungssensors eine von dem Fahrzeug bis zu einem Abfragezeitpunkt zurückgelegte Wegstrecke bestimmt wird, dass eine aktuelle Position des Fahrzeugs unter Berücksichtigung eines zurückliegenden Positionsdatums und der auf Grundlage der Messdaten des Beschleunigungssensors bestimmten Wegstrecke berechnet wird und dass die aktuelle Position des Fahrzeugs ausgegeben wird.

Die EP 2487 464 A2 betrifft einen Encoder mit einer Anordnung von reflektierenden Schlitzen, die entlang einer Messachse angeordnet wird. Die Schlitze werden mit einer Punktlichtquelle beleuchtet. Das von den reflektierenden Schlitzen reflektierte Licht wird in einer Anordnung von Empfangselementen registriert. Anhand der Signale der Empfangselemente werden Positionsinformationen enthalten. Zur Vermeidung von Störeinflüssen infolge von Rauschen werden Mittelwertbildungen von Positionswerten durchgeführt.

Die EP 10 2006 041 799 A1 betrifft eine Positionsbestimmungsvorrichtung für ein fahrerloses Transportfahrzeug, durch die Positionsmesswerte ermittelbar sind, die einer aktuellen Position der Positionsbestimmungsvorrichtung entsprechen. Die Positionsbestimmungsvorrichtung besitzt einen Bewegungssensor, durch den Bewegungsmesswerte ermittelbar sind. Ferner weist die Positionsbestimmungsvorrichtung eine Auswerte- und Steuereinrichtung auf, durch die die Positionsmesswerte und die Bewegungsmesswerte auswertbar sind, um entsprechende Positionsausgabesignale für eine Antriebssteuerung des fahrerlosen Transportfahrzeugs auszugeben, wobei aufgrund der ermittelten

Bewegungsmesswerte zumindest zwischen einer Langsambewegungsphase und einer Schnellbewegungsphase des die Positionsbestimmungsvorrichtung tragenden fahrerlosen Transportfahrzeugs unterschieden wird und die Positionsmesswerte für die verschiedenen Bewegungsphasen mit einer unterschiedlichen Integrationstiefe ausgewertet werden.

Die DE 10 2008 032 786 A1 betrifft eine Vorrichtung und ein Verfahren zum Bestimmen einer Position eines Fahrzeugs. Das Fahrzeug ist entlang einer Bahn in einer Bewegungsrichtung beweglich und weist einen optischen Positionsmarkenleser zum linienweisen Abtasten von Positionsmarken auf. Die Positionsmarken sind entlang der Bahn in festgelegter Orientierung angeordnet. Dazu weist der Positionsmarkenleser Mittel zur Mehrfachabtastung einzelner Positionsmarken in einer Mehrzahl zueinander beabstandeter Linien auf.

Der Erfindung liegt die Aufgabe zugrunde eine Sensoranordnung mit erhöhter Funktionalität bereitzustellen.

Zur Lösung dieser Aufgabe sind die Merkmale der unabhängigen Ansprüche beschrieben. Vorteilhafte Ausführungsformen und zweckmäßige Weiterbildungen sind in den abhängigen Ansprüchen beschrieben.

Die Erfindung betrifft eine Sensoranordnung mit einem Positionsmaßsystem umfassend eine Reihenanordnung von Codes, in welchen die Positionen dieser Codes im Positionsmaßsystem kodiert sind, und mit einem auf einer relativ zum Positionsmaßsystem bewegbaren Einheit angeordneten optischen Sensor, welcher ausgebildet ist, die Codes des Positionsmaßsystems zu erfassen und daraus die Positionen relativ zum Positionsmaßsystem bestimmen. Auf der relativ zum Positionsmaßsystem bewegbaren Einheit sind ein Beschleunigungssensor und gegebenenfalls ein Gyroskop angeordnet. Eine Auswerteeinheit ist vorgesehen, in welcher Signale des Beschleunigungssensors und/oder des Gyroskops zur Generierung von Kontrollsignalen und/oder zur Erhöhung der Genauigkeit von mittels des optischen Sensors generierten Positionswerten herangezogen werden. Die

Auswerteeinheit weist eine Fusionseinheit auf, in welcher zur Generierung rauschreduzierter Positionswerte zeitgleich im optischen Sensor ermittelte Positionswerte und Beschleunigungssignale des Beschleunigungssensors verknüpft werden. Positionswerte p(k T₁) werden in einem Takt T₁, Beschleunigungssignale b(k T₂) in einem Takt T₂ und rauschreduzierte Positionswerte P(k T₅) in einem Takt T₅ generiert.

Die Erfindung betrifft weiterhin ein entsprechendes Verfahren.

Mit der erfindungsgemäßen Sensoranordnung erfolgt eine Positionierung einer Einheit relativ zu einem Positionsmaßsystem. Prinzipiell kann die Einheit stationär und das Positionsmaßsystem beweglich angeordnet sein.

Ohne Beschränkung der Allgemeinheit wird im Folgenden von einem stationären Positionsmaßsystem ausgegangen, wobei eine relativ hierzu bewegliche Einheit wie einem Fahrzeug oder Arbeitsgerät, zum Beispiel einem Kran, positioniert werden soll.

Diese Positionierung erfolgt mittels eines an der beweglichen Einheit angebrachten optischen Sensors, der beispielsweise als Kamerasensor oder Scanner ausgebildet sein kann. Mit dem optischen Sensor werden in den Codes enthaltene Positionsinformationen gelesen. Zudem wird vorteilhaft die Lage eines Codes innerhalb eines Bildes, das mit dem optischen Sensor erfasst wird, ausgewertet. Aus diesen Informationen sind die Position des optischen Sensors und damit der beweglichen Einheit relativ zum Positionsmaßsystem bestimmt. Diese Positionierung kann durch Störeinflüsse beeinträchtigt sein. Derartige Störeinflüsse sind insbesondere Unregelmäßigkeiten in der Bewegung der beweglichen Einheit, insbesondere in der Führung der beweglichen Einheit wie zum Beispiel einem entlang einer Spur geführtem Fahrzeug.

Erfindungsgemäß weist die Sensoranordnung neben einem optischen Sensor auch einen Beschleunigungssensor und gegebenenfalls ein Gyroskop auf.

Mit dem Beschleunigungssensor beziehungsweise mit dem Gyroskop werden Unregelmäßigkeiten der Bewegung der beweglichen Einheit erfasst. Gemäß einer ersten Variante der Erfindung werden dann, wenn mit dem Beschleunigungssensor und/oder Gyroskop derartige Unregelmäßigkeiten festgestellt werden, in einer Überwachungseinheit als Bestandteil der Auswerteeinheit Kontrollsignale generiert. Die Kontrollsignale können Warnsignale sein, die einem Benutzer oder einer übergeordneten Steuerung der beweglichen Einheit die Unregelmäßigkeiten signalisieren. Weiterhin können die Kontrollsignale auch Steuersignale sein, insbesondere für die übergeordnete Steuerung der beweglichen Einheit, insbesondere des Fahrzeugs. Mit den Steuersignalen kann in die Steuerung der beweglichen Einheit eingegriffen werden um so den Unregelmäßigkeiten entgegen zu wirken. Weiterhin können die Steuersignale der Realisierung eines Frühwarnsystems genutzt werden, um rechtzeitig Ausfälle oder Störungen anzuzeigen.

Gemäß einer ersten Ausführungsform wird in der Überwachungseinheit ein Kontrollsignal generiert, wenn das aktuelle Signal des Beschleunigungssensors eine maximale Beschleunigung überschreitet, oder wenn das aktuelle Signal des Gyroskops einen maximalen Verdrehungswinkel oder eine maximale Verdrehungswinkeländerung überschreitet.

In diesem Fall werden die maximale Beschleunigung und der maximale Verdrehungswinkel beziehungsweise die maximale Verdrehungswinkeländerung während einer Inbetriebnahme bestimmt.

Alternativ wird in der Überwachungseinheit bei plötzlichen Änderungen der Signale des Beschleunigungssensors und/oder des Gyroskops ein Kontrollsignal generiert.

In diesem Fall muss keine Vorabbestimmung von Vergleichswerten während einer Inbetriebnahme erfolgen. Vielmehr kann durch fest vorgegebene Parametereinstellungen bestimmt sein ab welcher Änderungsgeschwindigkeit oder ab welchem Änderungsbetrag der Signale des Beschleunigungssensors oder Gyroskops eine plötzliche Änderung des Signals vorliegt, die zu einer Generierung eines Kontrollsignals führt.

Gemäß einer weiteren Variante können die Signale des Beschleunigungssensors beziehungsweise Gyroskops zur Erhöhung der Messgenauigkeit des optischen Sensors bei der Positionierung am Positionsmaßsystem dienen.

Erfindungsgemäß weist die Auswerteeinheit eine Fusionseinheit auf, in welcher zur Generierung rauschreduzierter Positionswerte zeitgleich im optischen Sensor ermittelte Positionswerte und Beschleunigungssignale des Beschleunigungssensors verknüpft werden.

Dabei werden Positionswerte p(k T₁) in einem Takt T₁, Beschleunigungssignale b(k T₂) in einem Takt T₂ und rauschreduzierte Positionswerte P(k T₅) in einem Takt T₅ generiert.

Im allgemeinen Fall können alle Takte T₁, T₂, T₅ unterschiedlich sein. Dann werden im optischen Sensor Positionswerte p(k T₁) mit einem Takt T₁ generiert, der sich von Takt T₂ der Beschleunigungssignale b(k T₂) des Beschleunigungssensors unterscheidet. In diesem Fall ist wenigstens ein Filter vorgesehen, mittels dessen die Positionswerte p(k T₁) und die Beschleunigungssignale b(k T₂) auf einen gemeinsamen Takt T₅ gebracht werden und dann zu den rauschreduzierten Positionswert P(k T₅) mit dem Takt T₅ zusammengeführt sind.

Insbesondere ist der Filter ein Interpolationsfilter.

Besonders vorteilhaft werden bereits die Positionswerte p(k T₁) und die Beschleunigungssignale im gleichen Takt T = T₁ = T₂ erzeugt. Dann können auch in der Fusionseinheit die rauschreduzierten Positionswerte p(k T₅) mit demselben Takt T₅ = T erzeugt werden.

Durch den zusätzlichen Einsatz eines Beschleunigungssensors und die Fusion, das heißt die zeitsynchrone Verknüpfung der Beschleunigungssignale dieses Beschleunigungssensors mit den Positionswerten des optischen Sensors, wird auf überraschend einfache Weise die Genauigkeit der Positionswerte sowohl bei statischen als auch bei dynamischen Anwendungen erheblich gesteigert, das heißt es wird eine hohe Messwertgenauigkeit unabhängig davon erzielt, ob sich die bewegliche Einheit nicht oder langsam oder aber mit hoher Geschwindigkeit relativ zum Positionsmaßsystem bewegt.

Die Fusionseinheit, die für die Fusion der Positionswerte und Beschleunigungssignale eingesetzt wird, ist als Filtereinheit ausgebildet. Prinzipiell kann diese Filtereinheit von einem Mittelwert-Filter gebildet sein. Besonders vorteilhaft ist die Filtereinheit als Kalman-Filter ausgebildet.

Mit der erfindungsgemäß durchgeführten Fusion zeitgleich ermittelter Positionswerte des optischen Sensors und Beschleunigungssignale des Beschleunigungssensors wird einerseits bei geringen Geschwindigkeiten zwischen der beweglichen Einheit und dem Positionsmaßsystem das Messwertrauschen stark reduziert. Andererseits wird bei hohen Relativgeschwindigkeiten zwischen der beweglichen Einheit und dem Positionsmaßsystem ein Nachlaufen der Positionswerte verhindert, wodurch eine hohe Genauigkeit und auch hohe zeitliche Dynamik bei den Messungen erzielt wird.

Die Erfindung wird im Folgenden anhand der Zeichnungen erläutert. Es zeigen:
- Figur 1:: Schematische Darstellung eines Ausführungsbeispiels der erfindungsgemäßen Sensoranordnung an einem Fahrzeug.
- Figur 2a, b:: Zwei Ausführungsformen der erfindungsgemäßen Sensoranordnung.
- Figur 3:: Zeitdiagramm von Positionswerten während der Fahrt des Fahrzeugs für die Anordnung gemäß Figur 2.
- Figur 4:: Ergebnisse der Messwertfilterung für die erfindungsgemäße Vorrichtung bei Stillstand des Fahrzeugs.
- Figur 5:: Zeitabhängige Positionswerte bei hoher Geschwindigkeit des Fahrzeugs.

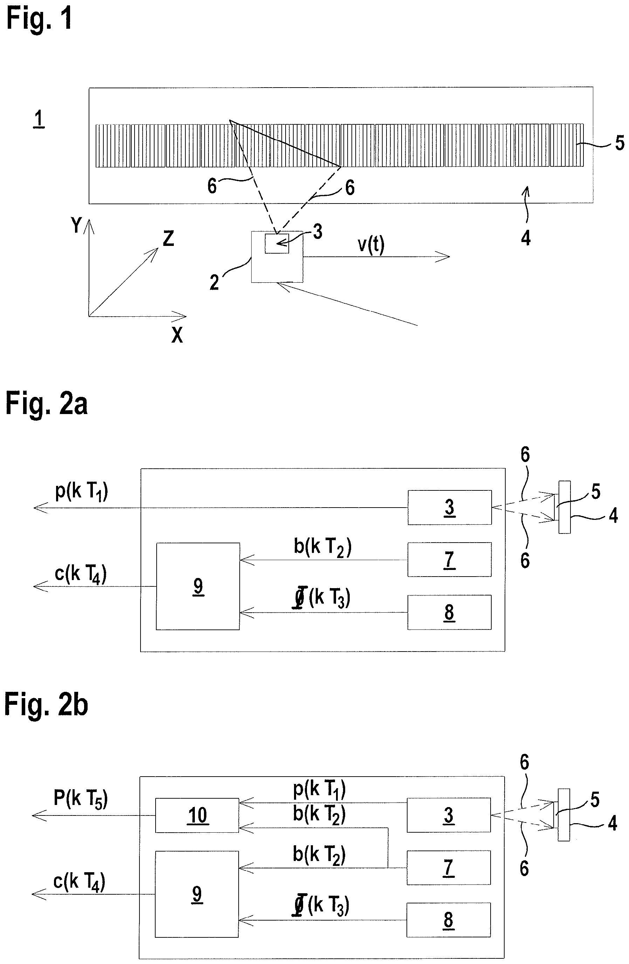

Figur 1 zeigt eine Anordnung der erfindungsgemäßen Sensoranordnung 1 an einem Fahrzeug 2. Die Sensoranordnung 1 weist, wie die Ausführungsformen gemäß den Figuren 2a, 2b zeigen, einen optischen Sensor 3 auf.

Das Fahrzeug 2 wird entlang einer in x-Richtung verlaufenden Fahrbahn mit einer Geschwindigkeit v(t) bewegt. Entlang der Fahrbahn ist ortsfest ein Positionsmaßsystem 4 installiert. Dieses besteht aus einer Reihenanordnung von in x-Richtung hintereinander äquidistant angeordneten Codes 5, insbesondere Barcodes. In jedem Code 5 ist dessen Position im Positionsmaßsystem 4 codiert.

Der optische Sensor 3 weist generell einen Lichtstrahlen 6 emittierenden Sender und einen Lichtstrahlen 6 empfangenden Empfänger auf. Gemäß einer ersten Ausgestaltung ist der optische Sensor 3 als Scanner ausgebildet. In diesem Fall werden die Lichtstrahlen 6 innerhalb eines Abtastbereichs mittels einer rotierenden Ablenkeinheit periodisch abgelenkt. Der Empfänger kann dann von einer Photodiode gebildet sein. Gemäß einer zweiten Ausgestaltung ist der optische Sensor 3 als Kamerasensor ausgebildet. In diesem Fall werden die Lichtstrahlen 6 vom Sender in eine feste Raumrichtung abgestrahlt. Der Abtastbereich ist in diesem Fall vom Sichtfeld des als Kamera ausgebildeten Empfängers gebildet.

In beiden Fällen weist der optische Sensor 3 eine Rechnereinheit als Bestandteil einer Auswerteeinheit der Sensoranordnung 1 auf. Aus den Empfangssignalen des Empfängers werden die in den einzelnen Codes 5 vorhandenen Positionsinformationen ermittelt. Zudem wird die Lage des jeweils gelesenen Codes 5 innerhalb des Abtastbereichs bestimmt.

Aus diesen Informationen werden in der Rechnereinheit in einem Zeittakt T₁ Positionswerte p(k T₁) (wobei k = 1, 2, 3 ...) gewonnen, die die aktuelle Position des optischen Sensors 3 beziehungsweise des Fahrzeugs 2 in x-Richtung definieren (Figuren 2a, 2b).

Figur 2a zeigt ein erstes Ausführungsbeispiel der erfindungsgemäßen Sensoranordnung 1. Mit dem optischen Sensor 3 werden die Codes 5 des Positionsmaßsystems 4 erfasst und abhängig hiervon in einem Takt T₁ Positionswerte p(k T₁) generiert, die an die Fahrzeugsteuerung des Fahrzeugs 2 ausgegeben werden, sodass das Fahrzeug 2 positionsgenau gesteuert werden kann.

Weiterhin weist die Sensoranordnung 1 gemäß Figur 2a einen Beschleunigungssensor 7 und ein Gyroskop 8 auf. Im Beschleunigungssensor 7 werden in einem Takt T₂ Beschleunigungssignal b(k T₂) generiert. Im Gyroskop 8 werden in einem Takt T₃ Verdrehungswinkeländerungen φ(k T₃) generiert, aus welchen Verdrehungswinkel ϕ(k T₃) bestimmt werden.

Die im Beschleunigungssensor 7 generierten Beschleunigungssignale b(k T₂) und die im Gyroskop 8 generierten Verdrehungswinkel ϕ(k T₃) werden in einer Überwachungseinheit 9 als Bestandteil der Auswerteeinheit der Sensoranordnung 1 ausgewertet um dadurch Kontrollsignale zu generieren, die Unregelmäßigkeiten der Bewegung des Fahrzeugs 2 wiedergeben.

Beispielsweise wird in der Überwachungseinheit 9 ein Kontrollsignal generiert, wenn das aktuelle Signal des Beschleunigungssensors 7 eine maximale Beschleunigung überschreitet, oder wenn das aktuelle Signal des Gyroskops 8 einen maximalen Verdrehungswinkel beziehungsweise eine maximale Verdrehungswinkeländerung überschreitet.

Dabei werden die maximale Beschleunigung und der maximale Verdrehungswinkel beziehungsweise Verdrehungswinkeländerung während einer Inbetriebnahme bestimmt.

Die während der Inbetriebnahme des Fahrzeugs 2 einer der Sensoranordnung 1 ermittelten maximalen Beschleunigungen und maximalen Verdrehungswinkeln beziehungsweise Verdrehungswinkeländerungen definieren die Grenzen, innerhalb derer sich das Fahrzeug 2 innerhalb der Vorgaben normal bewegt. Liegen die Beschleunigungssignale oder Verdrehungswinkel beziehungsweise Verdrehungswinkeländerungen außerhalb der festgelegten Grenzen, liegt eine Unregelmäßigkeit der Fahrzeugbewegung vor, beispielsweise bewirkt durch ein plötzliches Bremsen oder eine starke Verdrehung aus der vorgegebenen Fahrbahn heraus.

Die dann generierten Kontrollsignale können zu Warnzwecken an einer Anzeigeeinheit angezeigt werden. Alternativ oder zusätzlich können die Kontrollsignale in die Fahrzeugsteuerung eingelesen werden, wo anhand dieser Kontrollsignale Steuerbefehle für das Fahrzeug 2 generiert werden um den Unregelmäßigkeiten der Fahrzeugbewegung entgegen zu wirken.

Gemäß einer alternativen Ausgestaltung wird in der Überwachungseinheit 9 bei plötzlichen Änderungen der Signale des Beschleunigungssensors 7 und/oder des Gyroskops 8 ein Kontrollsignal generiert.

Bei dieser Variante brauchen während der Inbetriebnahme keine Sollwerte festgelegt werden. Vielmehr kann in der Überwachungseinheit 9 festgelegt sein, was als eine plötzliche Änderung der Beschleunigungssignale oder Verdrehungswinkel beziehungsweise Verdrehungswinkeländerungen anzusehen ist. Darüber hinaus kann mit einer zeitlichen Beobachtung der Beschleunigungsdaten und/ oder Gyroskop-Daten ein Frühwarnsystem entworfen werden, um Ausfälle oder Störungen rechtzeitig zu signalisieren.

Figur 2b zeigt ein weiteres Ausführungsbeispiel der erfindungsgemäßen Sensoranordnung 1.

Diese umfasst entsprechend der Ausführungsform der Figur 2a wieder einen optischen Sensor 3, einen Beschleunigungssensor 7 und ein Gyroskop 8, wobei die Beschleunigungssignale b(k T₂) des Beschleunigungssensors 7 und die Verdrehungswinkel ϕ(k T₃) beziehungsweise Verdrehungswinkeländerung φ(k T₃) des Gyroskops 8 wieder der Überwachungseinheit 9 zur Generierung von Kontrollsignalen c(k T₄) zugeführt werden, die in einem Takt T₄ generiert werden.

In Erweiterung zu der Ausführungsform gemäß Figur 2a weist die Sensoranordnung 1 eine Fusionseinheit 10 in Form einer Filtereinheit auf.

Dort erfolgt eine Fusion der Positionswerte und Beschleunigungssignale derart, dass die jeweiligen gleichen Zeiten ermittelten Positionswerte p(k T₁) und Beschleunigungssignale b(k T₂) miteinander verknüpft werden.

Die Filtereinheit ist bevorzugt als Kalman-Filter ausgebildet. Alternativ kann die Filtereinheit von einem Mittelwert-Filter gebildet sein.

Da die Takte T₁, T₂ der Positionswerte p(k T₁) und Beschleunigungssignale b(k T₂) im Allgemeinen unterschiedlich sind, ist ein Filter, insbesondere ein Interpolationsfilter vorgesehen, mittels dessen die Positionswerte p(k T₁) und Beschleunigungssignale b(k T₂) am Eingang der Fusionseinheit 10 auf einen gemeinsamen Takt T₅ gebracht werden um so als Ausgangssignal der Fusionseinheit 10 ein durch die Fusion der Positionswerte p(k T₁) und Beschleunigungssignale b(k T₂) erzeugtes Ausgangssignal von rauschreduzierten Positionswerten P(k T₅) im Takt T₅ zu erhalten.

Durch die Fusion der Positionswerte p(k T₁) mit den Beschleunigungssignalen b(k T₂) werden die Rauschanteile in den Ausgangssignalen P(k T₅) erheblich reduziert, sodass eine höhere Genauigkeit bei der Positionierung des Fahrzeugs 2 erhalten wird. Darüber hinaus ist durch die Fusion eine Überbrückung für den Fall möglich, dass keine Positionsdaten p(k T₁) ermittelt werden können. Dieser Fall tritt zum Beispiel dann ein, wenn der optische Weg zwischen Sensor und Positionsmaßsystem gestört ist.

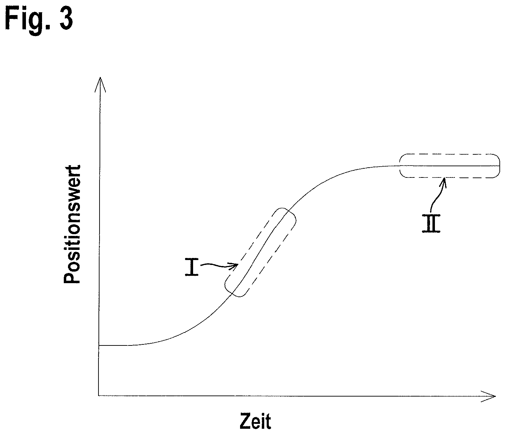

Figur 3 zeigt qualitativ die Zeitabhängigkeit von in der Fusionseinheit 10 ermittelten Positionswerten.

Im Bereich I bewegt sich das Fahrzeug 2 mit etwa konstanter Geschwindigkeit. Im Bereich II ist das Fahrzeug 2 zum Stillstand gekommen.

Im Stillstand des Fahrzeugs 2 (Bereich II) wird mit der Filtereinheit das Messwertrauschen in den Positionswerten reduziert, indem diese mit den Beschleunigungssignalen fusioniert werden.

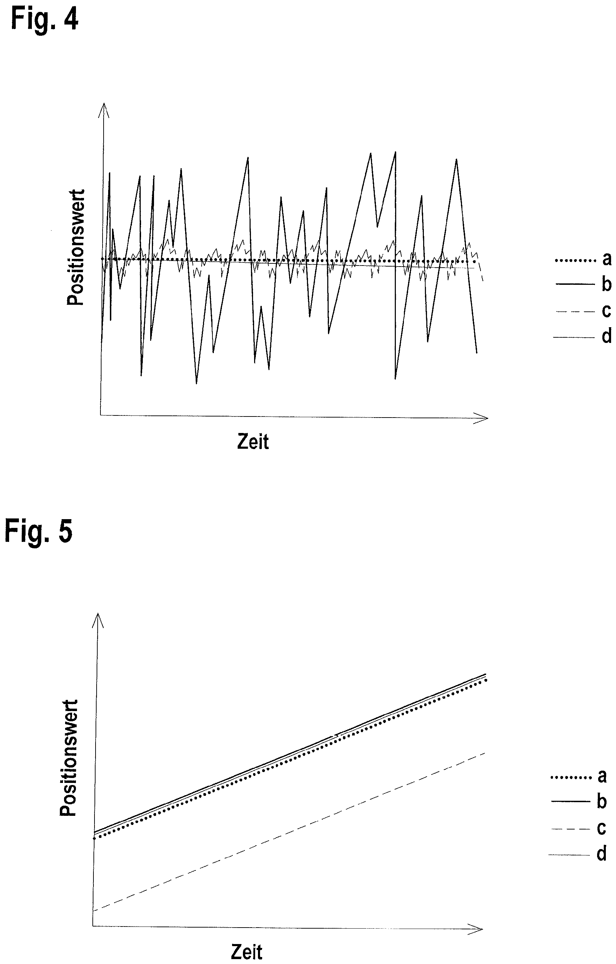

Figur 4 zeigt die Ergebnisse von Filterungen im Bereich II. Dort sind mit a die idealen Positionswerte bezeichnet. Mit b sind die verrauschten Positionswerte p(k T₁) bezeichnet. Mit c sind die mittels der Fusionseinheit 10 gefilterten Positionswerte P(k T₅) bezeichnet für den Fall, dass die Fusionseinheit 10 von einem Mittelwert-Filter gebildet ist. Mit d sind die Positionswerte P(k T₅) bezeichnet, die mit einer Filterung mittels einer als Kalman-Filter ausgebildeten Fusionseinheit 10 erhalten werden.

Wie Figur 4 zeigt, liefert die Filterung mit dem Kalman-Filter bessere, das heißt weniger verrauschte Positionswerte als bei einer Filterung mit einem Mittelwert-Filter.

Figur 5 zeigt die Ergebnisse von Filterungen von Positionswerten im Bereich I, wobei die Bezeichnungen a, b, c, d, der einzelnen Messwerte den Bezeichnungen a, b, c, d gemäß Figur 4 entsprechen.

Wie Figur 5 zeigt, wird bei einer Filterung der Positionswerte p(k T₁) mit einem Mittelwert-Filter ein Versatz der gefilterten Positionswerte zu den idealen Positionswerten erhalten, während die mit einem Kalman-Filter gefilterten Positionswerte nahezu den idealen Positionswerten entsprechen.

### B ezugszei chenli ste

- (1): Sensoranordnung
- (2): Fahrzeug
- (3): optischer Sensor
- (4): Positionsmaßsystem
- (5): Code
- (6): Lichtstrahlen
- (7): Beschleunigungssensor
- (8): Gyroskop
- (9): Überwachungseinheit
- (10): Fusionseinheit

## Patentansprüche

1. Sensoranordnung (1) mit einem Positionsmaßsystem (4) umfassend eine Reihenanordnung von Codes (5), in welchen die Positionen dieser Codes (5) im Positionsmaßsystem (4) kodiert sind, und mit einem auf einer relativ zum Positionsmaßsystem (4) bewegbaren Einheit angeordneten optischen Sensor (3), welcher ausgebildet ist, die Codes (5) des Positionsmaßsystems (4) zu erfassen und daraus die Positionen relativ zum Positionsmaßsystem (4) bestimmen, wobei auf der relativ zum Positionsmaßsystem (4) bewegbaren Einheit ein Beschleunigungssensor (7) und gegebenenfalls ein Gyroskop (8) angeordnet sind, und wobei eine Auswerteeinheit vorgesehen ist, die ausgestaltet ist, Signale des Beschleunigungssensors (7) und/oder des Gyroskops (8) zur Generierung von Kontrollsignalen und/oder zur Erhöhung der Genauigkeit von mittels des optischen Sensors (3) generierten Positionswerten heranzuziehen, **dadurch gekennzeichnet, dass** die Auswerteeinheit eine Fusionseinheit (10) aufweist, die ausgestaltet ist, zur Generierung rauschreduzierter Positionswerte zeitgleich im optischen Sensor (3) ermittelte Positionswerte und Beschleunigungssignale des Beschleunigungssensors (7) zu verknüpfen, wobei Positionswerte p(k T₁) in einem Takt T₁, Beschleunigungssignale b(k T₂) in einem Takt T₂ und rauschreduzierte Positionswerte P(k T₅) in einem Takt T₅ generiert werden.

2. Sensoranordnung (1) nach Anspruch 1, die ausgestaltet ist, mittels des Beschleunigungssensors (7) und/oder des Gyroskops (8) Positions- und/oder Geschwindigkeitswerte auch dann zu ermitteln, wenn das Positionsmaßsystem (4) keine Positionswerte liefert.

3. Sensoranordnung (1) nach einem der Ansprüche 1 oder 2, die ausgestaltet ist, anhand von Signalen des Beschleunigungssensors (7) und/oder des Gyroskops (8) Unregelmäßigkeiten der Bewegung der beweglichen Einheit zu erfassen.

4. Sensoranordnung (1) nach einem der Ansprüche 1 bis 3, wobei die Auswerteeinheit eine Überwachungseinheit (9) aufweist, die ausgestaltet ist, die Kontrollsignale zu generieren.

5. Sensoranordnung (1) nach Anspruch 4, wobei die Überwachungseinheit (9) ausgestaltet ist, ein Kontrollsignal zu generieren, wenn das aktuelle Signal des Beschleunigungssensors (7) eine maximale Beschleunigung überschreitet, oder wenn das aktuelle Signal des Gyroskops (8) einen maximalen Verdrehungswinkel beziehungsweise eine maximale Verdrehungswinkeländerung überschreitet.

6. Sensoranordnung (1) nach Anspruch 5, die ausgestaltet ist, die maximale Beschleunigung oder der maximale Verdrehungswinkel beziehungsweise die maximale Verdrehungswinkeländerung während einer Inbetriebnahme zu bestimmen.

7. Sensoranordnung (1) nach einem der Ansprüche 1 bis 6, wobei mit dem Beschleunigungssensor (7) und/oder dem Gyroskop (8) ein Frühwarnsystem gebildet wird, in dem eine zeitliche Beobachtung der Signale des Beschleunigungssensors (7) und/oder des Gyroskops (8) zur Erfassung und Signalisierung von Ausfällen oder Störungen erfolgt.

8. Sensoranordnung (1) nach einem der Ansprüche 4 bis 7, die ausgestaltet ist, in der Überwachungseinheit (9) bei plötzlichen Änderungen der Signale des Beschleunigungssensors (7) und/oder des Gyroskops (8) ein Kontrollsignal zu generieren.

9. Sensoranordnung (1) nach einem der Ansprüche 1 bis 8wobei die Fusionseinheit (10) eine Filtereinheit ist.

10. Sensoranordnung (1) nach Anspruch 9, wobei die Filtereinheit ein Kalman-Filter ist.

11. Sensoranordnung (1) nach einem der Ansprüche 1 bis 10, wobei die Takte T₁, T₂, T₅ alle identisch ausgebildet sind.

12. Sensoranordnung (1) nach einem der Ansprüche 1 bis 10, wobei wenigstens ein Filter vorgesehen ist, der ausgestaltet ist, die Positionswerte p(k T₁) und die Beschleunigungssignale b(k T₂) auf einen gemeinsamen Takt T₅ zu bringen und dann zu den rauschreduzierten Positionswerten P(k T₅) mit dem Takt T₅ zusammenzuführen.

13. Sensoranordnung (1) nach Anspruch 12, wobei der Filter ein Interpolationsfilter ist.

14. Sensoranordnung (1) nach einem der Ansprüche 1 bis 13, die ausgestaltet ist, dass durch die in der Fusionseinheit (10) durchgeführte Fusion eine Überbrückung basierend auf den Beschleunigungssignalen b(k T₂) für den Fall erfolgt, dass keine Positionswerte p(k T₁) aufgrund einer Störung des optischen Weges zwischen optischer Sensor (3) und Positionsmaßsystem (4) ermittelt werden können.

15. Sensoranordnung (1) nach einem der Ansprüche 1 bis 14, wobei der optische Sensor (3) ein Scanner oder ein Kamerasensor ist.

16. Verfahren zum Betrieb einer Sensoranordnung (1) nach Anspruch 1.

## Claims

1. A sensor assembly (1) with a position measuring system (4) comprising a series assembly of codes (5) in which the positions of these codes (5) in the position measuring system (4) are coded, and with an optical sensor (3) which is arranged on a unit which can be moved relative to the position measuring system (4) and which is designed to detect the codes (5) of the position measuring system (4) and to determine the positions relative to the position measuring system (4) therefrom, to detect the codes (5) of the position measurement system (4) and to determine therefrom the positions relative to the position measurement system (4), wherein an acceleration sensor (7) and, if appropriate, a gyroscope (8) are arranged on the unit which is movable relative to the position measurement system (4), and wherein an evaluation unit is provided which is designed to receive to use signals from the acceleration sensor (7) and/or the gyroscope (8) to generate control signals and/or to increase the accuracy of position values generated by means of the optical sensor (3), **characterised in that** the evaluation unit has a fusion unit (10) which is configured to combine position values determined simultaneously in the optical sensor (3) and acceleration signals of the acceleration sensor (7) in order to generate noise-reduced position values, position values p(k T₁) being generated in a cycle Ti, acceleration signals b(k T₂) being generated in a cycle T₂ and noise-reduced position values P(k T₅) being generated in a cycle T₅.

2. A sensor assembly (1) according to claim 1, which is designed to determine position and/or speed values by means of the acceleration sensor (7) and/or the gyroscope (8) even if the position measurement system (4) does not supply any position values.

3. A sensor assembly (1) according to one of the claims 1 or 2, which is designed to detect irregularities in the movement of the movable objects on the basis of signals from the acceleration sensor (7') and/or the gyroscope (8).

4. A sensor assembly (1) according to one of the claims 1 to 3, wherein the evaluation unit has a monitoring unit (9) which is designed to generate the control signals.

5. A sensor assembly (1) according to claim 4, wherein the monitoring unit (9) is designed to generate a control signal when the current signal of the acceleration sensor (7) exceeds a maximum acceleration, or when the current signal of the gyroscope (8) exceeds a maximum angle of rotation or a maximum change in angle of rotation.

6. A sensor assembly (1) according to claim 5, which is designed to determine the maximum acceleration or the maximum angle of rotation or the maximum change in angle of rotation during a start-up.

7. A sensor assembly (1) according to one of the claims 1 to 6, wherein an early warning system is formed with the acceleration sensor (7) and/or the gyroscope (8), in which a temporal observation of the signals of the acceleration sensor (7) and/or the gyroscope (8) takes place for the detection and signalling of failures or faults.

8. A sensor assembly (1) according to one of claims 4 to 7, which is designed to generate a control signal in the monitoring unit (9) in the event of sudden changes in the signals of the acceleration sensor (7) and/or the gyroscope (8).

9. A sensor assembly (1) according to any one of claims 1 to 18, wherein the fusion unit (10) is a filter unit.

10. A sensor assembly (1) according to claim 9, wherein the filter unit is a Kalman filter.

11. A sensor assembly (1) according to any one of claims 1 to 10, wherein the clocks T₁, T₂, T₅ are all identically formed.

12. A sensor assembly (1) according to one of claims 1 to 10, wherein at least one filter is provided which is designed to bring the position values p(k T₁) and the acceleration signals b(k T₁) to a common clock pulse T₅ and then to combine them to form the noise-reduced position values P(k T₅) with the clock pulse T₅.

13. Ahe sensor assembly (1) according to claim 12, wherein the filter is an interpolation filter.

14. A sensor assembly (1) according to any one of claims 1 to 13, which is configured such that the fusion carried out in the fusion unit (10) results in bridging based on the acceleration signals b(k T₂) in the event that no position values p(k T₁) can be determined due to a disturbance of the optical path between the optical sensor (3) and the position measurement system (4).

15. A sensor assembly (1) according to one of claims 1 to 14, wherein the optical sensor (3) is a scanner or a camera sensor.

16. A method for operating a sensor assembly (1) according to claim 1.

## Revendications

1. Dispositif capteur (1) avec un système de mesure de position (4) comprenant une série de codes (5) dans laquelle les positions de ces codes (5) dans le système de mesure de position (4) sont codées, et avec un capteur optique (3) qui est disposé sur une unité mobile par rapport au système de mesure de position (4) et qui est conçu pour détecter les codes (5) du système de mesure de position (4) et pour déterminer à partir de ceux-ci les positions par rapport au système de mesure de position (4), pour détecter les codes (5) du système de mesure de position (4) et pour déterminer à partir de ceux-ci les positions par rapport au système de mesure de position (4), un capteur d'accélération (7) et, le cas échéant, un gyroscope (8) étant disposés sur l'unité mobile par rapport au système de mesure de position (4), et dans lequel il est prévu une unité d'évaluation qui est conçue pour recevoir et utiliser des signaux du capteur d'accélération (7) et/ou du gyroscope (8) pour générer des signaux de commande et/ou pour augmenter la précision des valeurs de position générées au moyen du capteur optique (3), **caractérisé en ce que** l'unité d'évaluation présente une unité de fusion (10) qui est conçue pour combiner des valeurs de position déterminées simultanément dans le capteur optique (3) et des signaux d'accélération du capteur d'accélération (7) afin de générer des valeurs de position réduites en bruit, des valeurs de position p(k T₁) étant générées dans un cycle T₁, des signaux d'accélération b(k T₂) étant générés dans un cycle T₂ et des valeurs de position réduites en bruit P(k T₅) étant générées dans un cycle T₅.

2. Dispositif capteur (1) selon la revendication 1, qui est conçu pour déterminer des valeurs de position et/ou de vitesse au moyen du capteur d'accélération (7) et/ou du gyroscope (8) même si le système de mesure de position (4) ne fournit aucune valeur de position.

3. Dispositif capteur (1) selon l'une des revendications 1 ou 2, qui est conçu pour détecter des irrégularités dans le mouvement des objets mobiles sur la base des signaux du capteur d'accélération (7') et/ou du gyroscope (8).

4. Dispositif capteur (1) selon l'une des revendications 1 à 3, dans lequel l'unité d'évaluation comporte une unité de surveillance (9) qui est conçue pour générer les signaux de commande.

5. Dispositif capteur (1) selon la revendication 4, dans lequel l'unité de surveillance (9) est conçue pour générer un signal de commande lorsque le signal courant du capteur d'accélération (7) dépasse une accélération maximale, ou lorsque le signal courant du gyroscope (8) dépasse un angle de rotation maximal ou une variation maximale de l'angle de rotation.

6. Dispositif capteur (1) selon la revendication 5, qui est conçu pour déterminer l'accélération maximale ou l'angle de rotation maximal ou la variation maximale de l'angle de rotation pendant un démarrage.

7. Dispositif capteur (1) selon l'une des revendications 1 à 6, dans lequel un système d'alerte précoce est formé avec le capteur d'accélération (7) et/ou le gyroscope (8), dans lequel une observation temporelle des signaux du capteur d'accélération (7) et/ou du gyroscope (8) a lieu pour la détection et la signalisation de défaillances ou de défauts.

8. Dispositif capteur (1) selon l'une des revendications 4 à 7, qui est conçu pour générer un signal de commande dans l'unité de surveillance (9) en cas de changements soudains des signaux du capteur d'accélération (7) et/ou du gyroscope (8).

9. Dispositif capteur (1) selon l'une quelconque des revendications 1 à 18, dans lequel l'unité de fusion (10) est une unité de filtrage.

10. Dispositif capteur (1) selon la revendication 9, dans lequel l'unité de filtrage est un filtre de Kalman.

11. Agencement de capteur (1) selon l'une quelconque des revendications 1 à 10, dans lequel les horloges T₁, T₂, T₅ sont toutes formées de manière identique.

12. Dispositif de capteur (1) selon l'une des revendications 1 à 10, dans lequel il est prévu au moins un filtre qui est conçu pour amener les valeurs de position p(k T₁) et les signaux d'accélération b(k T₂) à une impulsion d'horloge commune T₂, puis pour les combiner afin de former les valeurs de position P(k T₅) réduites en bruit avec l'impulsion d'horloge T₅.

13. Dispositif de détection (1) selon la revendication 12, dans lequel le filtre est un filtre d'interpolation.

14. Dispositif capteur (1) selon l'une quelconque des revendications 1 à 13, qui est configuré de telle sorte que la fusion effectuée dans l'unité de fusion (10) entraîne un pontage sur la base des signaux d'accélération b(k T₂) dans le cas où aucune valeur de position p(k T₁) ne peut être déterminée en raison d'une perturbation du trajet optique entre le capteur optique (3) et le système de mesure de position (4).

15. Dispositif capteur (1) selon l'une des revendications 1 à 14, dans lequel le capteur optique (3) est un scanner ou un capteur de caméra.

16. Procédé de fonctionnement d'un dispositif capteur (1) selon la revendication 1..
